# EUROPEAN PATENT SPECIFICATION

(11) **EP 3 498 068 B1**
(45) Date of publication and mention of the grant of the patent: **09.09.2020**
(21) Application number: 18211691.3
(22) Date of filing: 11.12.2018
(51) Int. Cl.: A01C 1/08

(54) **PULSED ELECTRIC FIELD SYSTEM TO PROCESS GRAINED PRODUCTS**
SYSTEM MIT GEPULSTEM ELEKTRISCHEN FELD ZUR VERARBEITUNG VON KÖRNIGEN PRODUKTEN
SYSTÈME DE CHAMP ÉLECTRIQUE PULSÉ POUR TRAITER DES PRODUITS GRAINÉS

(30) Priority: 13.12.2017 TR 201720295
(43) Date of publication of application: 19.06.2019
(73) Proprietor: Bolu Abant Izzet Baysal Universitesi, Bolu (TR)
(72) Inventor: AKDEMIR EVRENDILEK, Gulsun, Bolu (TR); TANASOV, Igor, 53207 Nikopol (UA)
(74) Representative: Cayli, Hülya

(56) References cited:
- CN-Y- 2 561 194
- JP-A- 2002 010 766
- RU-C1- 2 290 775

## Description

### Related Technical Field

The present invention relates to pulsed electric field systems which are used to process (e.g. disinfect) the grained products such as a seed.

### Prior Art

Nowadays, there is an increasing demand for microbiologically reliable products from consumers. To this end, next-generation processing technologies are conducted which not only provide reliability of the foods with low processing temperatures, but also maintain nutritional values thereof. One of the most leading of these new technologies is the pulsed electric field application.

The pulsed electric field systems consist of a voltage pulse generator, a treatment chamber, a flow control system, and controlling and monitoring devices. The pulsed electric field application is based on the fact that two conductive electrodes are disposed into a pipe system, wherein the pipe system has a nonconductive cylindrical shape located at said treatment chamber, to supply electricity, which has high electric field intensity, in a pulsating manner at short time periods defined by microseconds. By this way, electrical transmission between the electrodes is performed through liquid food and present microorganisms are made ineffective since the pipe within the system is conductive. Developments in the field of pulsed electric field technology so far has enabled this technology to be used to inactivate the microorganisms formed especially in liquid foods so that said foods are pasteurised.

While working for various food products (e.g. orange juice, rosehip juice etc.) which have especially a low viscosity and high electrical conductivity to some extent, application of the pulsed electric field also works for products having high viscosity and low acid ratio such as yoghurt, ayran, pudding with rice, and liquid egg etc.

A major part of the seeds produced all around the world and Turkey are not able to be used as they are contaminated especially by soil borne pathogenic microorganisms, and seed borne disease factors cause huge losses in terms of amount and quality of the plant production. For that reason, various studies are employed concerning use of the pulsed electric field application in order to purify the seeds from said microorganisms.

According to the pulsed electric field systems used for pasteurisation of food, the liquid food is subjected to an electric field while passing through the cylindrical pipe system which is horizontally located in the treatment chamber. However, said application is not appropriate for solid products, and that is why processing of grained products like powder or seeds requires different applications. CN102577691A provides an example for such applications and said document discloses a pulsed electric field system which is developed to process seeds and comprises a pulse generator and a treatment chamber. Two copper plates are connected with poles of said pulse generator, wherein the copper plates are placed horizontally and parallel to each other in the treatment chamber. Said copper plates comprise a plexiglass chamber in which the seeds are able to be placed. For the mentioned system, there is no disclosure regarding how to place and remove the seeds in and from the chamber, and a practical solution cannot be proposed for the grained products.

In CN2561194Y a corona discharge treatment system suitable to be used for seed optimisation is disclosed. Said system comprises a comb shaped electrode and a flat shaped electrode which are positioned horizontally and parallel to each other. In JP2002010766A a corona discharge treatment system comprising an acicular electrode and a flat electrode which are vertically placed are disclosed. In this system, a shutter is used for holding the products within the electrodes during the treatment. RU2290775C1 discloses an apparatus for seed treatment. The apparatus comprises a body made of diamagnetic material, surrounded by a winding fed from a pulsed current source and a source of ultraviolet radiation.

### Brief Description of Invention

A pulsed electric field system to process grained products by subjecting them to an electric field, the system comprising:
at least one body;
at least one modulator provided at said body and comprising;
   at least one pulse generator which comprises at least one power source, and at least a first pole and at least a second pole to which voltage received from said power source is transmitted so as to generate a pulsed electric field,
   at least one switching unit to switch the voltage received from said power source and to transmit the voltage to said pulse generator, and
   at least one control unit to adjust parameters of the pulsed electric field generated by said pulse generator according to the size and characteristics of the product to be treated,
   whereby the system is comprising a treatment chamber which is located at said body and comprises;
      - at least a first insulating plate located vertical to a surface on which the system is provided,
      - at least a second insulating plate extending parallel to said first plate such that a space is formed in between them,
      - at least a first electrode which is located on the surface of said first plate facing said second plate, and to which said first pole of said pulse generator is connected,
      - at least a second electrode which is located on the surface of said second plate facing said first plate, extends parallel to said first electrode such that a space is formed in between them, and to which said second pole of said pulse generator is connected, and
      - at least one spring mechanism by which the distance between said first electrode and said second electrode is able to be adjusted,
wherein the products to which pulsed electric field will be applied are subjected to pulsed electric field having parameters determined by said control unit while these products are passing through the space between said first electrode and said second electrode by the effect of gravity.

The system according to the present invention enables the grained products which have different sizes, such as seeds, to be subjected to a pulsed electric field with the determined electric field parameters at a determined time period.

### Object of Invention

An object of the present invention is to develop a pulsed electric field system which is used to process the foods.

Another object of the present invention is to develop a pulsed electric field system in which grained products such as seeds are able to be processed.

Yet another object of the present invention is to develop a pulsed electric field system in which the distance between the electrodes is able to be adjusted.

### Description of Drawings

Exemplary embodiments of the pulsed electric field system according to the present invention are shown in the attached drawings, in which:
Figure 1 is a schematic diagram of an embodiment of the pulsed electric field system according to the present invention.
Figure 2 is another schematic diagram of an embodiment of the pulsed electric field system according to the present invention.
Figure 3 is a perspective view of the dosing unit of the pulsed electric field system according to the present invention.
Figure 4 is another perspective view of the dosing unit of the pulsed electric field system according to the present invention.
Figure 5 is a perspective view of the parallel plate treatment chamber of the pulsed electric field system according to the present invention.
Figure 6 is a demounted view of an embodiment of the pulsed electric field system according to the present invention.

All the parts illustrated in figures are individually assigned a reference numeral and the corresponding terms of these numbers are listed below:

| | |
|---|---|
| Treatment Chamber | (1) |
| First plate | (1a) |
| Second plate | (1b) |
| First electrode | (1c) |
| Second electrode | (1d) |
| Light source | (1e) |
| Modulator | (2) |
| Loading unit | (3) |
| First flap | (3a) |
| Second flap | (3b) |
| First support | (3c) |
| Second support | (3d) |
| First coupling | (3e) |
| Second coupling | (3f) |
| Movement element | (3h) |
| Spring | (3i) |
| Vibrator | (3j) |
| Motor | (3k) |
| Power source | (4) |
| Pulse Generator | (5) |
| Control unit | (6) |
| Switching unit | (7) |
| Chamber | (8) |
| Body | (9) |
| First cover | (10) |
| Second cover | (11) |

### Description of Invention

Nowadays, the pulsed electric field systems are used to pasteurise liquid foods having various viscosity ratio. Such systems comprise a high voltage pulse generator, a treatment chamber, a flow control system, controlling devices and monitoring devices. Treatment chambers of said systems have such a structure that the liquid foods are passed through a chamber by taking advantage of the fluidity characteristics thereof and then subjected to a pulsed electric field in said chamber. Nowadays, various studies are conducted to subject the grained products such as seeds to a pulsed electric field so that germination yield is increased and contamination of the seeds is eliminated. Within this context, with the present invention there is developed a pulsed electric field system in which grained products such as seeds may be subjected to an electric field with the determined electric field parameters at a determined time period.

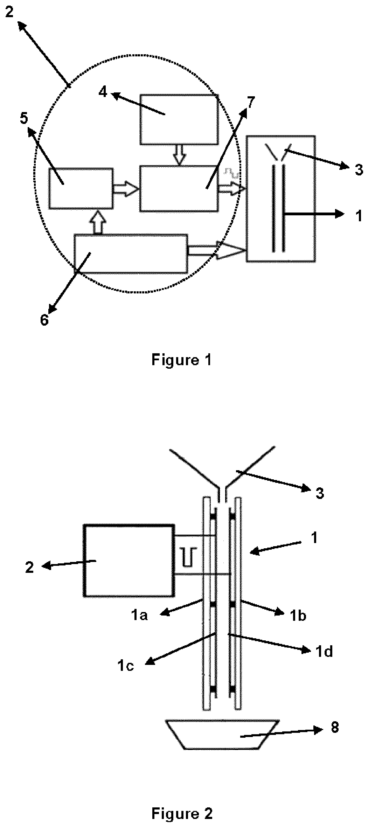

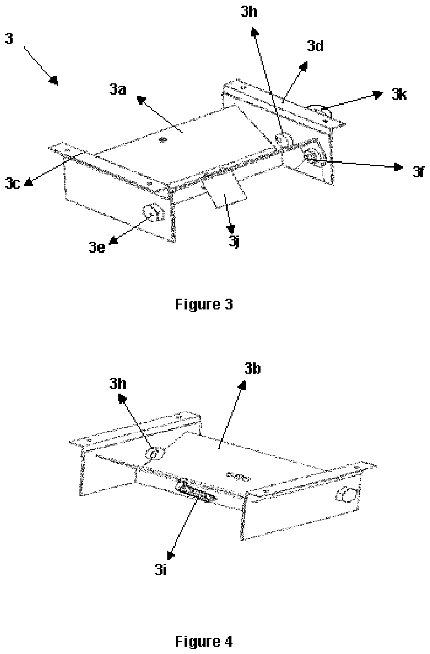

The pulsed electric field system according to the present invention for processing grained products, such as seeds, by subjecting them to an electric field with the determined electric field parameters at a determined time period, exemplary views of which are illustrated in figures 1-6, comprises:
at least one body (9);
at least one modulator (2) provided at said body (9) and comprising;
   at least one pulse generator (5) which comprises at least one power source (4), and at least a first pole (not shown in the figures) and at least a second pole (not shown in the figures) to which voltage received from said power source (4) is transmitted so as to generate a pulsed electric field,
   at least one switching unit (7) to switch the voltage received from said power source (4) and to transmit the voltage to said pulse generator (5), and
   at least one control unit (6) to adjust parameters of the pulsed electric field generated by said pulse generator (5) according to the size and characteristics of the product to be treated;
a treatment chamber (1) located at said body (9) and comprising;
at least a first insulating plate (1a) located vertical to a surface on which the system is provided,
at least a second insulating plate (1b) extending parallel to said first plate (1a) such that a space is formed in between them,
at least a first electrode (1c) which is located on the surface of said first plate (1a) facing said second plate (1b), and to which said first pole of said pulse generator (5) is connected,
at least a second electrode (1d) which is located on the surface of said second plate (1b) facing said first plate (1a), extends parallel to said first electrode (1c) such that a space is formed in between them, and to which said second pole of said pulse generator (5) is connected, and
at least one spring mechanism (not shown in the figures) by which the distance between said first electrode (1c) and said second electrode (1d) is able to be adjusted,
wherein the products to which pulsed electric field will be applied are subjected to pulsed electric field having parameters determined by said control unit (6) while these products are passing through the space between said first electrode(1c) and said second electrode (1d) by the effect of gravity.

The distance between the first electrode (1c) and the second electrode (1d) located at the treatment chamber (1) is adjusted depending on the size of the grained product to be treated; and after the electrical parameters (frequency, electric field intensity) are determined by said control unit (6), the product which is loaded to the treatment chamber (1) is subjected to the electric field with the determined parameters while passing between the two parallel plates at the vertical axis by the effect of the gravity in the treatment chamber (1). By locating said first electrode (1c) and second electrode (1d) vertically to the surface, the grained product may be loaded to said treatment chamber (1) in a practical way and processed; and by adjusting the distance between the electrodes, the grained products of different sizes is able to be processed.

In a preferred embodiment of the invention, said pulsed electric field system comprises at least one loading unit (3) located at said body (9) in order to enable transmission of the products, which will be subjected to the pulsed electric field treatment, to the treatment chamber (1). This loading unit (3) preferably comprises at least a first fixed flap (3a); at least a second moveable flap (3a) which is provided opposite to said first flap (3a) such that an adjustable opening is formed between the second flap (3b) and said first flap (3a) in a way to enable transition of the products to said treatment chamber (1) depending on the sizes of said products, and which is rotatable around a first axis (not shown in the figures) to adjust said opening; at least a first support (3c) and at least a second support (3d) on which said first flap (3a) and said second flap (3b) are mounted, and which are located parallel to each other such that the first flap (3a) and the second flap (3b) are in between them; at least a first coupling (3e) through which said second flap (3b) is fixed to said first support (3c) so as to rotate around said first axis; and at least a second coupling (3f) through which said second flap (3b) is fixed to said second support (3d) so as to rotate around said first axis. Thanks to the loading unit (3) according to the invention, the products are able to be transmitted to the treatment chamber (1) depending on their sizes, and by this way, grained products of every size are able to be processed effectively.

In an embodiment of the system of the invention, preferably, said loading unit (3) comprises at least one movement assembly enabling movement of said second flap (3b) in order to form said opening between said second flap (3b) and said first flap (3a). This movement assembly preferably comprises at least one micro motor (3k), at least one movement element (3h) connected to said micro motor (3k) and transmitting movement of the micro motor (3k) to said second flap (3b), and at least one electro vibrator (3j) preferably located at the second flap (3b) so as to be at a surface of the second flap (3b) that is not contacting the product, and enabling downward movement of said grained product through the opening formed between said first flap (3a) and said second flap (3b) by the effect of gravity. According to this embodiment, said movement element (3h) is preferably in the form of a disc and is located on the first support (3c) and/or the second support (3d) such that it rotates around a second axis with the rotational movement of the micro motor (3k) and contacts with the second flap (3b) to adjust amount of the opening between the first flap (3a) and the second flap (3b) by rotating around the first axis. Also, the system according to this embodiment preferably comprises at least one shaft by which the movement element (3h) is connected with said micro motor (3k) and which transmits the movement of the micro motor (3k) to the movement element (3h) and is connected with the movement element (3h) in an eccentric way. Thanks to this eccentric shaft, the movement element (3h) is in contact with the second flap (3b) efficiently and the amount of the opening is able to be adjusted easily.

In a preferred embodiment of the invention, said loading unit (3) comprises at least one spring (3i) which enables the opening between said first flap (3a) and second flap (3b) to return to closed position, and which is connected to said first fixed flap (3a) on at least one side, and to the said moveable second flap (3b) on at least another side.

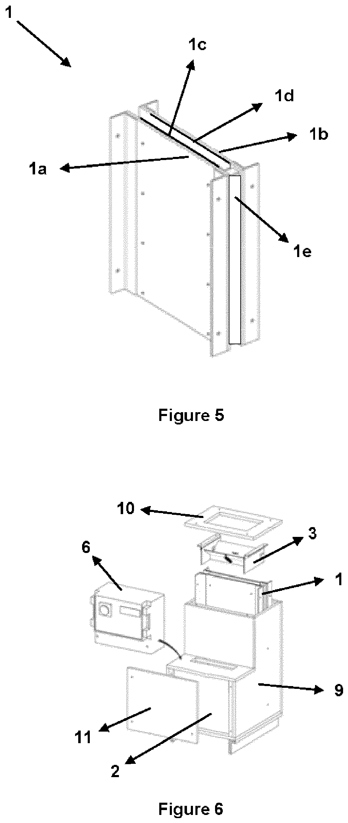

In a preferred embodiment of the invention shown in figure 6, there is provided at least a first cover (10) located at an upper part of said body (9) on said loading unit (3) and enabling access to said loading unit (3) and to said treatment chamber (1) provided at the body.

In a preferred embodiment of the invention, said loading unit (3) is provided at an upper part of said treatment chamber (1), and the grained product loaded is passed through the opening between said first flap (3a) and said second flap (3b) to be transmitted to said treatment chamber (1) by the effect of gravity.

In an alternative embodiment of the invention, the system according to the invention preferably comprises at least one light source (1e) located at said treatment chamber (1) and providing light of ultraviolet wavelength in order to ionize the in the area between said first electrode (1c) and said second electrode (1d).

In a preferred embodiment of the system of the invention (shown in figure 6), the system according to the invention comprises at least a second cover (11) located on said body (9) (e.g. at a front part thereof) and enabling access to the components within the body (9).

In a preferred embodiment of the system of the invention, said pulsed electric field system comprises at least one monitoring unit (not shown in the figures) to display parameters of the electric field that is applied and to monitor the treatment.

In a preferred embodiment of the invention, said pulsed electric field system comprises a chamber (8) which is located at a lower part of said treatment chamber (1), and into which the material passing through said treatment chamber (1) by the effect of gravity and being subjected to the pulsed electric field is filled.

Thanks to the system according to the present invention, it is provided that the grained products having different sizes such as seeds can be easily loaded via a loading unit for which the opening thereof is able to be adjusted depending on the sizes of the loaded material; and that the grained products can be subjected to the pulsed electric fields with the determined electric field parameters at a determined time period while passing through the treatment chamber, in which distance between the electrodes is able to be adjusted, by the effect of gravity.

## Claims

1. A pulsed electric field system to process grained products by subjecting them to an electric field, the system comprising:
- at least one body (9);
- at least one modulator (2) provided at said body (9) and comprising;
at least one pulse generator (5) which comprises at least one power source (4), at least a first pole and at least a second pole to which voltage received from said power source (4) is transmitted so as to generate a pulsed electric field,
at least one switching unit (7) to switch the voltage received from said power source (4) and to transmit the voltage to said pulse generator (5), and
at least one control unit (6) to adjust parameters of the pulsed electric field generated by said pulse generator (5) according to the size and characteristics of the product to be treated,
whereby the system is comprising a treatment chamber (1) which is located at said body (9) and comprises;
• at least a first insulating plate (1a) located vertical to a surface on which the system is provided,
• at least a second insulating plate (1b) extending parallel to said first plate (1a) such that a space is formed in between them,
• at least a first electrode (1c) which is located on the surface of said first plate (1a) facing said second plate (1b), and to which said first pole of said pulse generator (5) is connected,
• at least a second electrode (1d) which is located on the surface of said second plate (1b) facing said first plate (1a), extends parallel to said first electrode (1c) such that a space is formed in between them, and to which said second pole of said pulse generator (5) is connected, and
• at least one spring mechanism by which the distance between said first electrode (1c) and said second electrode (1d) is able to be adjusted,
wherein the products to which pulsed electric field will be applied are subjected to pulsed electric fields having parameters determined by said control unit (6) while these products are passing through the space between said first electrode (1c) and said second electrode (1d) by the effect of gravity.

2. A pulsed electric field system according to Claim 1, **characterized by** comprising at least one loading unit (3) located at said body (9) in order to enable transmission of the products, which will be subjected to the pulsed electric field treatment, to the treatment chamber (1).

3. A pulsed electric field system according to Claim 2, **characterized in that** said loading unit (3) comprises;
- at least a first fixed flap (3a);
- at least a second moveable flap (3a) provided opposite to said first flap (3a) such that an adjustable opening is formed between the second flap (3b) and said first flap (3a) in a way to enable transition of the products to said treatment chamber (1) depending on the sizes of said products, and which is rotatable around a first axis to adjust said opening;
- at least a first support (3c) and at least a second support (3d) on which said first flap (3a) and said second flap (3b) are mounted, and which are located parallel to each other such that the first flap (3a) and the second flap (3b) are in between them;
- at least a first coupling (3e) through which said second flap (3b) is fixed to said first support (3c) so as to rotate around said first axis, and
- at least a second coupling (3f) through which said second flap (3b) is fixed to said second support (3d) so as to rotate around said first axis.

4. A pulsed electric field system according to Claim 3, **characterized in that** said loading unit (3) comprises at least one movement assembly enabling movement of said second flap (3b) in order to form said opening between said second flap (3b) and said first flap (3a).

5. A pulsed electric field system according to Claim 4, **characterized in that** the movement assembly comprises;
- at least one micro motor (3k);
- at least one movement element (3h) connected to said micro motor (3k) and transmitting movement of the micro motor (3k) to said second flap (3b), and
- at least one electro vibrator (3j) enabling downward movement of said grained product through the opening formed between said first flap (3a) and said second flap (3b) by the effect of gravity.

6. A pulsed electric field system according to Claim 5, **characterized in that** said electro vibrator (3j) is located at the second flap (3b) so as to be at a surface of the second flap (3b) that is not contacting the product.

7. A pulsed electric field system according to Claim 5 or Claim 6, **characterized in that** said movement element (3h) is in the form of a disc and is located on the first support (3c) and/or the second support (3d) such that it rotates around a second axis with the rotational movement of the micro motor (3k) and contacts with the second flap (3b) to adjust amount of the opening between the first flap (3a) and the second flap (3b) by rotating around the first axis.

8. A pulsed electric field system according to any one of Claims 5 to 7, **characterized by** comprising at least one shaft by which the movement element (3h) is connected with said micro motor (3k), which transmits the movement of the micro motor (3k) to the movement element (3h) and is connected with the movement element (3h) in an eccentric way.

9. A pulsed electric field system according to any one of Claims 3 to 8, **characterized in that** said loading unit (3) comprises at least one spring (3i) which enables the opening between said first flap (3a) and second flap (3b) to return to closed position, and which is connected to said first fixed flap (3a) on at least one side, and to the said moveable second flap (3b) on at least another side.

10. A pulsed electric field system according to any one of Claims 2 to 9, **characterized in that** said loading unit (3) is provided at an upper part of said treatment chamber (1).

11. A pulsed electric field system according to any one of Claims 2 to 10, **characterized by** comprising at least a first cover (10) located at an upper part of said body (9) on said loading unit (3) and enabling access to said loading unit (3) and to said treatment chamber (1) provided at the body.

12. A pulsed electric field system according to any one of preceding claims, **characterized by** comprising at least one light source (1e) located at said treatment chamber (1) and providing light of ultraviolet wavelength in order to ionize the air in the area between said first electrode (1c) and said second electrode (1d).

13. A pulsed electric field system according to claim 11, **characterized by** comprising at least a second cover (11) located at a front part of said body (9) and enabling access to the components within the body (9).

14. A pulsed electric field system according to any one of preceding claims, **characterized by** comprising at least one monitoring unit to display parameters of the electric field that is applied and to monitor the treatment.

15. A pulsed electric field system according to any one of preceding claims, **characterized by** comprising a chamber (8) which is located at a lower part of said treatment chamber (1), and into which the material passing through said treatment chamber (1) by the effect of gravity is filled.

## Patentansprüche

1. System mit gepulstem elektrischen Feld zum Prozessieren körniger Produkte, indem sie einem elektrischen Feld ausgesetzt werden, wobei das System aufweist:
- wenigstens ein Gehäuse (9),
- wenigstens einen an dem Gehäuse (9) vorgesehenen Modulator (2) mit
wenigstens einem Pulsgenerator (5), der wenigstens eine Energiequelle (4), wenigstens einen ersten Pol und wenigstens einen zweiten Pol aufweist, zu denen von der Energiequelle (4) empfangene Spannung übertragen wird, um so ein gepulstes elektrisches Feld zu erzeugen,
wenigstens einer Schalteinheit (7), um die von der Energiequelle empfangene Spannung umzuschalten und die Spannung zu dem Pulsgenerator (5) zu übertragen, und
wenigstens einer Steuereinheit (6) zum Einstellen von Parametern des von dem Pulsgenerator (5) erzeugten gepulsten elektrischen Feldes nach Maßgabe der Größe und der Eigenschaften des zu behandelnden Produkts,
- wobei das System eine Behandlungskammer (1) aufweist, die an dem Gehäuse (9) angeordnet ist und aufweist:
• wenigstens eine erste Isolatorplatte (1a), die vertikal zu einer Oberfläche angeordnet ist, auf der das System bereitgestellt ist,
• wenigstens eine zweite Isolatorplatte (1b), die parallel zu der ersten Platte (1a) verläuft, so dass zwischen ihnen ein Zwischenraum gebildet ist,
• wenigstens eine erste Elektrode (1c), die auf der der zweiten Platte (1b) zugewandten Oberfläche der ersten Platte (1a) angeordnet ist und mit der der erste Pol des Pulsgenerators (5) verbunden ist,
• wenigstens eine zweite Elektrode (1d), die auf der der ersten Platte (1a) zugewandten Oberfläche der zweiten Platte (1b) angeordnet ist, die parallel zu der ersten Elektrode (1c) verläuft, so dass ein Raum zwischen ihnen gebildet ist, und die mit dem zweiten Pol des Pulsgenerators (5) verbunden ist, und
• wenigstens einen Federmechanismus, durch den der Abstand zwischen der ersten Elektrode (1c) und der zweiten Elektrode (1d) eingestellt werden kann,
wobei die Produkte, auf die das gepulste elektrische Feld angewendet wird, gepulsten elektrischen Feldern mit Parametern ausgesetzt werden, die durch die Steuereinheit (6) bestimmt werden, während diese Produkte den Zwischenraum zwischen der ersten Elektrode (1c) und der zweiten Elektrode (1d) durch Wirkung der Schwerkraft passieren.

2. System mit gepulstem elektrischen Feld nach Anspruch 1, **dadurch gekennzeichnet, dass** es wenigstens eine an dem Gehäuse (9) angeordnete Ladeeinheit (3) aufweist, um die Produkte, die einer Behandlung mit dem gepulsten elektrischen Feld ausgesetzt werden sollen, zu der Behandlungskammer (1) übertragen zu können.

3. System mit gepulstem elektrischen Feld nach Anspruch 2, **dadurch gekennzeichnet, dass** die Ladeeinheit (3) aufweist:
- wenigstens eine erste feststehende Klappe (3a),
- wenigstens eine zweite bewegliche Klappe (3b), die gegenüber der ersten Klappe (3a) vorgesehen ist, so dass eine einstellbare Öffnung zwischen der zweiten Klappe (3b) und der ersten Klappe (3a) in der Weise gebildet ist, um den Übergang der Produkte in die Behandlungskammer (1) abhängig von den Größen der Produkte zu ermöglichen, und die um eine erste Achse drehbar ist, um die Öffnung einzustellen,
- wenigstens einen ersten Träger (3c) und wenigstens einen zweiten Träger (3d), auf denen die erste Klappe (3a) und die zweite Klappe (3b) montiert sind und die parallel zueinander angeordnet sind, so dass die erste Klappe (3a) und die zweite Klappe (3b) sich zwischen ihnen befinden,
- wenigstens eine erste Kopplung (3e), durch die die zweite Klappe (3b) mit dem ersten Träger (3c) verbunden ist, um sich so um die erste Achse zu drehen, und
- wenigstens eine zweite Kopplung (3f), durch die die zweite Klappe (3b) mit dem zweiten Träger (3d) verbunden ist, um sich so um die erste Achse zu drehen.

4. System mit gepulstem elektrischen Feld nach Anspruch 3, **dadurch gekennzeichnet, dass** die Ladeeinheit (3) wenigstens eine Bewegungsanordnung aufweist, die die Bewegung der zweiten Klappe (3b) ermöglicht, um die Öffnung zwischen der zweiten Klappe (3b) und der ersten Klappe (3a) zu bilden.

5. System mit gepulstem elektrischen Feld nach Anspruch 4, **dadurch gekennzeichnet, dass** die Bewegungsanordnung aufweist:
- wenigstens einen Mikromotor (3k),
- wenigstens ein Bewegungselement (3h), das mit dem Mikromotor (3k) verbunden ist und die Bewegung des Mikromotors (3k) auf die zweite Klappe (3b) überträgt, und
- wenigstens einen elektrischen Vibrator (3j), der die Abwärtsbewegung des körnigen Produkts durch Wirkung der Schwerkraft durch die zwischen der ersten Klappe (3a) und der zweiten Klappe (3b) gebildete Öffnung ermöglicht.

6. System mit gepulstem elektrischen Feld nach Anspruch 5, **dadurch gekennzeichnet, dass** der elektrische Vibrator (3j) an der zweiten Klappe (3b) angeordnet ist, um an derjenigen Oberfläche der zweiten Klappe (3b) zu sein, die nicht in Kontakt mit dem Produkt kommt.

7. System mit gepulstem elektrischen Feld nach Anspruch 5 oder Anspruch 6, **dadurch gekennzeichnet, dass** das Bewegungselement (3h) die Form einer Scheibe hat und sich auf dem ersten Träger (3c) und/oder dem zweiten Träger (3d) befindet, so dass es sich mit der Drehbewegung des Mikromotors (3k) um eine zweite Achse dreht und in Kontakt mit der zweiten Klappe (3b) steht, um den Grad der Öffnung zwischen der ersten Klappe (3a) und der zweiten Klappe (3b) durch Drehen um die erste Achse einzustellen.

8. System mit gepulstem elektrischen Feld nach einem der Ansprüche 5 bis 7, **dadurch gekennzeichnet, dass** es wenigstens eine Welle aufweist, durch die das Bewegungselement (3h) mit dem Mikromotor (3k) verbunden ist und die die Bewegung des Mikromotors (3k) auf das Bewegungselement (3h) überträgt und die mit dem Bewegungselement (3h) in einer exzentrischen Weise verbunden ist.

9. System mit gepulstem elektrischen Feld nach einem der Ansprüche 3 bis 8, **dadurch gekennzeichnet, dass** die Ladeeinheit (3) wenigstens eine Feder (3i) aufweist, die es ermöglicht, dass die Öffnung zwischen der ersten Klappe (3a) und der zweiten Klappe (3b) in eine geschlossene Stellung zurückkehrt, und die auf wenigstens einer Seite mit der ersten feststehenden Klappe (3a) und auf wenigstens einer anderen Seite mit der beweglichen zweiten Klappe (3b) verbunden ist.

10. System mit gepulstem elektrischen Feld nach einem der Ansprüche 2 bis 9, **dadurch gekennzeichnet, dass** die Ladeeinheit (3) in einem oberen Teil der Behandlungskammer (1) bereitgestellt ist.

11. System mit gepulstem elektrischen Feld nach einem der Ansprüche 2 bis 10, **dadurch gekennzeichnet, dass** es wenigstens eine erste Abdeckung (10) aufweist, die an einem oberen Teil des Gehäuses (9) an der Ladeeinheit (3) angeordnet ist und die Zugang zu der Ladeeinheit (3) und der durch das Gehäuse bereitgestellten Behandlungskammer (1) ermöglicht.

12. System mit gepulstem elektrischen Feld nach einem der vorhergehenden Ansprüche, **dadurch gekennzeichnet, dass** es wenigstens eine Lichtquelle (1e) aufweist, die an der Behandlungskammer (1) angeordnet ist und Licht mit ultravioletter Wellenlänge bereitstellt, um Luft in dem Gebiet zwischen der ersten Elektrode (1c) und der zweiten Elektrode (1d) zu ionisieren.

13. System mit gepulstem elektrischen Feld nach Anspruch 11, **dadurch gekennzeichnet, dass** es wenigstens eine zweite Abdeckung aufweist, die an einem vorderen Teil des Gehäuses (9) angeordnet ist und die Zugang zu den Komponenten innerhalb des Gehäuses (9) ermöglicht.

14. System mit gepulstem elektrischen Feld nach einem der vorhergehenden Ansprüche, **dadurch gekennzeichnet, dass** es wenigstens eine Überwachungseinheit aufweist, um Parameter des angewendeten elektrischen Feldes anzuzeigen und um die Behandlung zu überwachen.

15. System mit gepulstem elektrischen Feld nach einem der vorhergehenden Ansprüche, **dadurch gekennzeichnet, dass** es eine Kammer (8) aufweist, die in einem unteren Teil der Behandlungskammer (1) liegt und in die das die Behandlungskammer (1) durch Wirkung der Schwerkraft passierende Material gefüllt wird.

## Revendications

1. Système de champ électrique pulsé pour traiter des produits grainés en les soumettant à un champ électrique, le système comprenant :
- au moins un corps (9) ;
- au moins un modulateur (2) prévu au niveau dudit corps (9) et comprenant ;
au moins un générateur d'impulsion (5) qui comprend au moins une source d'alimentation (4), au moins un premier pôle et au moins un second pôle vers lequel une tension reçue depuis ladite source d'alimentation (4) est transmise de manière à générer un champ électrique pulsé,
au moins une unité de commutation (7) pour commuter la tension reçue depuis ladite source d'alimentation (4) et pour transmettre la tension audit générateur d'impulsion (5), et
au moins une unité de commande (6) pour ajuster des paramètres du champ électrique pulsé généré par ledit générateur d'impulsion (5) en fonction de la taille et des caractéristiques du produit à traiter,
selon lequel le système comprend une chambre de traitement (1) qui est située au niveau dudit corps (9) et comprend ;
• au moins une première plaque isolante (1a) située verticalement par rapport à une surface sur laquelle le système est prévu,
• au moins une seconde plaque isolante (1b) s'étendant parallèlement à ladite première plaque (1a) de telle sorte qu'un espace soit formé entre elles,
• au moins une première électrode (1c) qui est située sur la surface de ladite première plaque (1a) faisant face à ladite seconde plaque (1b), et à laquelle ledit premier pôle dudit générateur d'impulsion (5) est connecté,
• au moins une seconde électrode (1d) qui est située sur la surface de ladite seconde plaque (1b) faisant face à ladite première plaque (1a), s'étend parallèlement à ladite première électrode (1c) de telle sorte qu'un espace soit formé entre elles, et à laquelle ledit second pôle dudit générateur d'impulsion (5) est connecté, et
• au moins un mécanisme à ressort par lequel la distance entre ladite première électrode (1c) et ladite seconde électrode (1d) peut être ajustée,
dans lequel les produits auxquels un champ électrique pulsé sera appliqué sont soumis à des champs électriques pulsés ayant des paramètres déterminés par ladite unité de commande (6) tandis que ces produits passent à travers l'espace entre ladite première électrode (1c) et ladite seconde électrode (1d) par l'effet de la gravité.

2. Système de champ électrique pulsé selon la revendication 1, **caractérisé en ce qu'**il comprend au moins une unité de chargement (3) située au niveau dudit corps (9) afin de permettre une transmission des produits, qui seront soumis au traitement par champ électrique pulsé, à la chambre de traitement (1).

3. Système de champ électrique pulsé selon la revendication 2, **caractérisé en ce que** ladite unité de chargement (3) comprend :
- au moins un premier volet fixe (3a) ;
- au moins un second volet mobile (3a) prévu à l'opposé dudit premier volet (3a) de sorte qu'une ouverture ajustable soit formée entre le second volet (3b) et ledit premier volet (3a) de manière à permettre une transition des produits vers ladite chambre de traitement (1) en fonction des tailles desdits produits, et qui peut tourner autour d'un premier axe pour ajuster ladite ouverture ;
- au moins un premier support (3c) et au moins un second support (3d) sur lesquels sont montés ledit premier volet (3a) et ledit second volet (3b), et qui sont situés parallèlement l'un par rapport à l'autre de sorte que le premier volet (3a) et le second volet (3b) sont entre eux ;
- au moins un premier couplage (3e) à travers lequel ledit second volet (3b) est fixé audit premier support (3c) de manière à tourner autour dudit premier axe, et
- au moins un second couplage (3f) à travers lequel ledit second volet (3b) est fixé audit second support (3d) de manière à tourner autour dudit premier axe.

4. Système de champ électrique pulsé selon la revendication 3, **caractérisé en ce que** ladite unité de chargement (3) comprend au moins un ensemble de mouvement permettant un mouvement dudit second volet (3b) afin de former ladite ouverture entre ledit second volet (3b) et ledit premier volet (3a).

5. Système de champ électrique pulsé selon la revendication 4, **caractérisé en ce que** ledit ensemble de mouvement comprend :
- au moins un micro-moteur (3k) ;
- au moins un élément de mouvement (3h) connecté audit micro-moteur (3k) et transmettant un mouvement du micro-moteur (3k) audit second volet (3b), et
- au moins un vibrateur électrique (3j) permettant un mouvement vers le bas dudit produit grainé à travers l'ouverture formée entre ledit premier volet (3a) et ledit second volet (3b) par l'effet de la gravité.

6. Système de champ électrique pulsé selon la revendication 5, **caractérisé en ce que** ledit vibrateur électrique (3j) est situé au niveau du second volet (3b) de manière à être à une surface du second volet (3b) qui ne vient pas en contact avec le produit.

7. Système de champ électrique pulsé selon la revendication 5 ou la revendication 6, **caractérisé en ce que** ledit élément de mouvement (3h) a la forme d'un disque et est situé sur le premier support (3c) et/ou le second support (3d) de telle sorte qu'il tourne autour d'un second axe avec le mouvement de rotation du micro-moteur (3k) et vient en contact avec le second volet (3b) pour ajuster une quantité de l'ouverture entre le premier volet (3a) et le second volet (3b) en tournant autour du premier axe.

8. Système de champ électrique pulsé selon l'une quelconque des revendications 5 à 7, **caractérisé en ce qu'**il comprend au moins un arbre par l'intermédiaire duquel l'élément de mouvement (3h) est connecté audit micro-moteur (3k), qui transmet le mouvement du micro-moteur (3k) à l'élément de mouvement (3h) et est connecté à l'élément de mouvement (3h) de manière excentrique.

9. Système de champ électrique pulsé selon l'une quelconque des revendications 3 à 8, **caractérisé en ce que** ladite unité de chargement (3) comprend au moins un ressort (3i) qui permet à l'ouverture entre ledit premier volet (3a) et le second volet (3b) de retourner dans une position fermée, et qui est connecté audit premier volet fixe (3a) sur au moins un côté, et audit second volet mobile (3b) sur au moins un autre côté.

10. Système de champ électrique pulsé selon l'une quelconque des revendications 2 à 9, **caractérisé en ce que** ladite unité de chargement (3) est prévue au niveau d'une partie supérieure de ladite chambre de traitement (1).

11. Système de champ électrique pulsé selon l'une quelconque des revendications 2 à 10, **caractérisé en ce qu'**il comprend au moins un premier couvercle (10) situé au niveau d'une partie supérieure dudit corps (9) sur ladite unité de chargement (3) et permettant un accès à ladite unité de chargement (3) et à ladite chambre de traitement (1) prévue au niveau du corps.

12. Système de champ électrique pulsé selon l'une quelconque des revendications précédentes, **caractérisé en ce qu'**il comprend au moins une source de lumière (1e) située au niveau de ladite chambre de traitement (1) et fournissant une lumière de longueur d'onde ultraviolette afin d'ioniser l'air dans la zone située entre ladite première l'électrode (1c) et ladite seconde électrode (1d).

13. Système de champ électrique pulsé selon la revendication 11, **caractérisé en ce qu'**il comprend au moins un second couvercle (11) situé au niveau d'une partie avant dudit corps (9) et permettant un accès aux composants à l'intérieur du corps (9).

14. Système de champ électrique pulsé selon l'une quelconque des revendications précédentes, **caractérisé en ce qu'**il comprend au moins une unité de surveillance pour afficher des paramètres du champ électrique qui est appliqué et pour surveiller le traitement.

15. Système de champ électrique pulsé selon l'une quelconque des revendications précédentes, **caractérisé en ce qu'**il comprend une chambre (8) qui est située au niveau d'une partie inférieure de ladite chambre de traitement (1), et dans lequel le matériau passant à travers ladite chambre de traitement (1) par l'effet de la gravité est versé.
